# EUROPÄISCHE PATENTSCHRIFT

(11) **EP 4 565 752 B1**
(45) Veröffentlichungstag und Bekanntmachung des Hinweises auf die Patenterteilung: **22.07.2026**
(21) Anmeldenummer: 23741283.8
(22) Anmeldetag: 05.07.2023
(51) Int. Cl.: E02F 9/20

(54) **VERFAHREN ZUM INVERTIEREN VON FAHRVORGABEN EINER ARBEITSMASCHINE**
METHOD FOR INVERTING DRIVING INSTRUCTIONS FOR A WORKING MACHINE
PROCÉDÉ D'INVERSION D'INSTRUCTIONS DE CONDUITE POUR UN ENGIN DE CHANTIER

(30) Priorität: 03.08.2022 DE 102022208041
(43) Veröffentlichungstag der Anmeldung: 11.06.2025
(73) Patentinhaber: ZF Friedrichshafen AG, 88046 Friedrichshafen (DE)
(72) Erfinder: BALZ, Dieter, 88239 Wangen im Allgäu (DE); BREHMER, Udo, 88045 Friedrichshafen (DE); GONZALEZ, Raphael, 88299 Leutkirch (DE); TRAUB, Stefan, 88048 Friedrichshafen (DE)
(74) Vertreter: ZF Friedrichshafen AG
(86) Internationale Anmeldenummer: PCT/EP2023/068515
(87) Internationale Veröffentlichungsnummer: WO 2024/028027

(56) Entgegenhaltungen:
- US-A1- 2017 315 561
- US-A1- 2021 363 727
- US-B1- 6 502 016

## Beschreibung

Die vorliegende Erfindung betrifft ein Verfahren zum Invertieren und Umsetzen von Fahrvorgaben einer Arbeitsmaschine, sowie Vorrichtung zur Datenverarbeitung, welches eingerichtet ist, das Verfahren zum Invertieren von Fahrvorgaben auszuführen. Ferner sind ein Computerprogrammprodukt und eine Arbeitsmaschine mit einer erfindungsgemäßen Vorrichtung zur Datenverarbeitung umfasst.

Aus dem Stand der Technik sind Verfahren zum Ausführen von sich wiederholenden Handlungsanweisungen bekannt. Insbesondere offenbart EP 3 559 355 A1 ein Verfahren zum Betrieb mindestens einer Arbeitsmaschine, wobei mindestens einer Vermessungsvorrichtung zur Messung eines Oberflächenprofils eines Geländes einer Baustelle zur Generierung tatsächlicher Oberflächenprofildaten betrieben wird. Entsprechend eines gespeicherten Gradienten werden Maschinenbetriebsdaten, die dem Merkmal betreffenden Gradienten zugeordnet sind, aus der Datenbank abgerufen und die Arbeitsmaschine basierend auf den abgerufenen Maschinenbetriebsdaten betrieben.

DE 10 2016 121 895 A1 beschreibt ein System zum automatischen Aktivieren und Deaktivieren von Allradantrieb als Reaktion auf einen Fahrzeug-GPS-Ort. Dabei werden insbesondere Informationen über einen Straßentyp und Wetterbedingungen berücksichtigt.

DE 10 2009 045 511 A1 offenbart eine Vorrichtung und ein Verfahren zum Erlernen einer Funktion einer Bedienhilfe in einem Kraftfahrzeug, wobei eine Steueranweisung einer Ortsposition zugeordnet und eine Bedienhilfe aktiviert wird, wenn die Steueranweisung in der Vergangenheit bereits in einer festgelegten Anzahl von Fällen ausgegeben wurde. In einer Weiterbildung soll die Vorrichtung dahingehend lernfähig sein, dass ortsabhängig wiederkehrende Routineaufgaben automatisiert werden.

US 6 502 016 B1 betrifft eine Fahrzeugführungsvorrichtung und insbesondere eine Vorrichtung, die geeignet ist, um einen unbemannten Muldenkipper auf einer Baustelle, beispielsweise in einer Mine, zu steuern und beschreibt somit den technologischen Hintergrund.

Die Aufgabe der vorliegenden Erfindung besteht darin, bekannte Verfahren zum Betreiben einer Arbeitsmaschine zu verbessern. Die Aufgabe wird mit dem erfindungsgemäßen Verfahren gelöst. Dabei wird in einem ersten Schritt eine Fahrvorgabe eingegeben und anschließend initiiert. Hierunter ist zu verstehen, dass durch einen Bediener eine von der aktuellen Fahrvorgabe abweichende Anweisung eingegeben wird. Dies kann vor Ort in einer Kabine der Arbeitsmaschine oder Remote bzw. anhand von in einem Speicherelement hinterlegten Befehlen erfolgen. Dementsprechend ist eine Mensch-Maschine-Schnittstelle in der Kabine oder eine Datenschnittstelle für eine Remote-Steuerung vorgesehen. Unter einer Fahrvorgabe ist dabei eine Vorgabe von fahrdynamischen Parametern zu verstehen. Hierunter sind beispielsweise eine Leistungs- und/oder Drehmoment-/Drehzahlanpassung, eine Übersetzungsänderung eines Getriebes, ein Zu-/Abschalten eines Allradantriebs, ein Betätigen/Deaktivieren einer Differenzialsperre einer Achse, ein De-/Aktivieren eines Nebenabtriebs, ein De-/Aktivieren einer verschleißfreien hydrodynamischen oder elektrodynamischen Dauerbremse, ein De-/Aktivieren eines Fahrmodus (Eco, Power, Rekuperation) oder dergleichen zu fassen.

Bei der Arbeitsmaschine handelt es sich typischerweise um eine Bau-, Land- und/oder forstwirtschaftliche Maschine. In gleicher Weise kann es sich jedoch auch um ein Nutzfahrzeug oder Flurförderzeuge handeln. Neben konventionell (durch einen Bediener in einer Kabine) gesteuerten Arbeitsmaschinen kann die Eingabe einer Fahrvorgabe auch bei teilautonomen oder autonomen Arbeitsmaschinen erfolgen.

In einem zweiten Schritt des erfindungsgemäßen Verfahrens werden Positionsdaten der Arbeitsmaschine der eingegebenen Fahrvorgabe zugeordnet. Dies bedeutet, dass über Mittel zur Positionsbestimmung eine Position der Arbeitsmaschine zum Zeitpunkt der Eingabe der Fahrvorgabe ermittelt, mit der Fahrvorgabe verknüpft bzw. dieser zugeordnet werden und in dem Speicherelement abgelegt werden. Neben den absoluten Positionsdaten kann auch eine zuvor zurückgelegte Trajektorie oder eine Fahrtrichtung berücksichtigt und gespeichert werden. Die Positionsbestimmung kann beispielsweise in einem absoluten Koordinatensystem oder in einem relativen Koordinatensystem erfolgen. Geeignete Mittel zur Positionsbestimmung in einem absoluten Koordinatensystem sind beispielsweise GPS-Sensoren oder dergleichen. Aber auch andere Systeme zur Positionsbestimmung bzw. Verortung können verwendet werden.

Anschließend wird in einem dritten Schritt ein Widerruf der Fahrvorgabe eingegeben. Auch diese Eingabe erfolgt entweder über einen Bediener oder Remote in der zuvor beschriebenen Art und Weise. Der Widerruf der Fahrvorgabe bewirkt, dass die Fahrvorgabe beendet wird. Mit anderen Worten wird ein im ersten Schritt aktivierter fahrdynamischer Parameter deaktiviert oder umgekehrt ein deaktivierter fahrdynamischer Parameter wieder aktiviert. In einem vierten Schritt werden Positionsdaten der Arbeitsmaschine dem Widerruf der Fahrvorgabe zugeordnet und in dem Speicherelement zusammen mit dem Widerruf der Fahrvorgabe abgelegt.

Anhand der den Fahrvorgaben bzw. dem Widerruf der Fahrvorgabe zugeordneten Positionsdaten wird ein Korridor der Fahrvorgabe definiert, wobei die Fahrvorgabe in einem fünften Schritt dahingehend invertiert wird, dass die Fahrvorgabe in umgekehrter Reihenfolge initiiert und widerrufen wird, wenn die Arbeitsmaschine den Korridor in umgekehrter Richtung befährt. Insbesondere bildet der Korridor eine Strecke ab, welche durch die Positionsdaten der Eingabe der Fahrvorgabe und der Eingabe des Widerrufs der Fahrvorgabe definiert wird. Anders ausgedrückt beschreibt der Korridor einen Vektor mit einem expliziten Start- und Endpunkt sowie einer Richtungszuweisung. In verschiedenen Ausgestaltungen können verschiedene Korridore gebildet und verschiedene Fahranforderungen in dem Speicherelement abgelegt, miteinander kombiniert oder einzeln für sich ausgeführt werden.

Gemäß einer Weiterbildung der Erfindung werden bei einem erneuten Befahren des Korridors je nach Richtung die Fahrvorgaben in originärer oder umgekehrter Reihenfolge ausgeführt. Dies bedeutet, dass bei dem erneuten Befahren in der erstmals befahrenen Richtung (Schritte 1 bis 4) die Schritte in ebendieser Reihenfolge automatisch wiederholt werden. Durch das Invertieren der Schritte werden demzufolge die Schritte 1 bis 4 in umgekehrter Reihenfolge durchgeführt oder wiederholt, wenn die Arbeitsmaschine den Korridor in umgekehrter Richtung, also entgegen der originären Richtung, befährt.

Alternativ oder ergänzend weist der Korridor der Fahrvorgabe einen Toleranzbereich auf, wobei der Toleranzbereich neben einen abweichenden Anfahrwinkel der Arbeitsmaschine in Bezug auf den Korridor eine partielle Abweichung und/oder eine vollumfängliche Abweichung einer Trajektorie berücksichtigt. Hierunter ist zu verstehen, dass einerseits die Trajektorie beim Anfahren des Korridors berücksichtigt wird und andererseits eine nicht exakte Überdeckung mit dem Vektor bzw. dem Korridor ebenfalls Berücksichtigung findet. Eine partielle Abweichung beschreibt dabei, dass in Teilen eine Abweichung der aktuellen Trajektorie zu dem Korridor vorliegt. In einer Ausgestaltung kann die aktuelle Trajektorie dabei den Korridor lediglich in einem Punkt schneiden, oder aber nur in wenigstens einem Punkt davon abweichen. Eine vollumfängliche Abweichung beschreibt dabei, dass die aktuelle Trajektorie bzw. der Fahrweg der Arbeitsmaschine beispielsweise in einem (zulässigen) Abstand permanent von dem Korridor bzw. dem Vektor abweicht.

In einer weiterbildenden Ausgestaltung wird eine aktuelle und/oder geplante Trajektorie in Bezug auf das Befahren des Korridors überprüft und die Fahrvorgabe prädiktiv initiiert. Hierunter ist zu verstehen, dass ermittelt wird, ob mit der aktuellen oder geplanten Trajektorie davon auszugehen ist, dass der Korridor in der originären oder umgekehrten Richtung befahren wird, sodass bereits im Vorfeld Vorbereitungen für die Anpassung der fahrdynamischen Parameter getroffen werden können. Beispielsweise kann ein Betriebsmodus der Arbeitsmaschine bereits vorab angepasst werden. Eine geplante Trajektorie ergibt sich beispielsweise aus einer Routenführung der Arbeitsmaschine anhand eines Navigationssystems. Demzufolge erfolgt eine Überprüfung dahingehend, ob eine geplante Route oder Trajektorie durch den Korridor führt. Auch dann kann prädiktiv, also vorausschauend, eine Anpassung der fahrdynamischen Parameter erfolgen.

In einer Ausgestaltung erfolgt das Invertieren der Fahrvorgabe durch eine Eingabe des Bedieners. Hierzu kann vorgesehen sein, dass nach Eingabe des Widerrufs der Fahrvorgabe über die Mensch-Maschine-Schnittstelle eine Abfrage erfolgt, ob ein Invertieren der Fahrvorgabe vorgenommen und in dem Speicherelement abgelegt werden soll. Entsprechend hat eine Eingabe zur Bestätigung oder Ablehnung zu erfolgen. Auch kann bereits im Vorfeld ein Modus ausgewählt werden, wonach eine Wiederholung (Playback-Funktion) ausgewählt oder deaktiviert werden kann. Dies hat zur Folge, dass die die Ausführung der Fahrvorgabe automatisch erfolgt. Mitunter kann über die Mensch-Maschine-Schnittstelle ein Hinweis ausgegeben werden, dass eine automatische Ausführung der Fahrvorgabe erfolgt, wenn der Korridor befahren wird. Dies kann sich auf eine einzelne Fahrvorgabe oder generell auf sämtliche Fahrvorgaben beziehen. Auch kann die Abfrage für das Invertieren bereits zum Zeitpunkt der Eingabe der Fahrvorgabe erfolgen. Dies betrifft auch eine Abfrage, ob bei erneutem Befahren des Korridors eine Wiederholung der Fahrvorgabe in der originären bzw. umgekehrten Reihenfolge erfolgen soll.

Die Eingabe der Fahrvorgabe bewirkt eine Anpassung von fahrdynamischen Parametern der Arbeitsmaschine in der oben genannten Ausgestaltung. Insbesondere kann hierdurch eine Anpassung der fahrdynamischen Parameter aufgrund einer Topographieänderung des Fahrwegs (Steigung, Gefälle, etc.), einer Beschaffenheit des Fahrwegs (trocken, feucht, nass, vereist, Schotter, Kies, Sand, etc.) oder aufgrund von über-/durchfahrbaren Hindernissen (Fluss, Senke, Erdhaufen, Geröll, etc.) vorgenommen werden. Dies hat einen effizienteren Betrieb der Arbeitsmaschine zur Folge, da einerseits ein Antriebsstrang in einem optimierten Betriebsbereich betrieben werden kann und andererseits ein gesteigertes Arbeitsergebnis aufgrund einer besseren Arbeitsleistung der Arbeitsmaschine erzielt werden kann.

Gemäß einem weiteren Aspekt betrifft die vorliegende Erfindung ein Computerprogrammprodukt. Dieses umfasst Befehle, die bei der Ausführung des Programms durch einen Computer diesen veranlassen, das erfindungsgemäße Verfahren auszuführen. Bei dem Computer kann es sich typischerweise um ein Steuergerät der Arbeitsmaschine handeln. Exemplarisch aber nicht abschließend sind hier ein Getriebesteuergerät, ein Motorsteuergerät oder ein übergeordneter Fahrzeugführungsrechner zu erwähnen. Auch kann ein separates Steuergerät vorgesehen sein, welches exklusiv für das erfindungsgemäße Verfahren vorgesehen ist oder welches neben dem erfindungsgemäßen Verfahren auch weitere Funktionen umsetzt. Das Speicherelement kann dabei in dem zuvor genannten Steuergerät integriert oder separat vorgesehen werden.

Ferner betrifft die Erfindung eine Vorrichtung zur Datenverarbeitung. Diese umfasst Mittel zur Ausführung des erfindungsgemäßen Verfahrens. Insbesondere kann es sich dabei um den zuvor genannten Computer bzw. das betreffende Steuergerät handeln.

Weiter ist von der Erfindung eine Arbeitsmaschine mit einem Antriebsstrang und Mitteln zur Anpassung fahrdynamischer Parameter und der erfindungsgemäßen Vorrichtung umfasst. Der Antriebsstrang umfasst dabei beispielsweise ein Antriebselement, ein Getriebe und Achsen bzw. Bremsen, mittels welcher eine Antriebsleistung des Antriebselements auf Räder oder einen Kettenantrieb der Arbeitsmaschine übertragen wird. Das Antriebselement kann als Verbrennungskraftmaschine und/oder elektrische Maschine ausgeführt sein. Ferner kann der Antriebsstrang Differenzialsperren beinhalten, welche entweder ein Ausgleichsgetriebe einer Achse oder zwischen zwei Achsen sperrt oder freigibt. Die Mittel zur Anpassung fahrdynamischer Parameter sind dabei insbesondere Aktoren, welche eine Zustandsänderung der zuvor genannten Elemente des Antriebsstrangs bewirken. In einer möglichen Ausgestaltung betreffen die Mittel auch beispielweise ein Motorsteuergerät, durch welches eine Anpassung des Betriebszustands des Antriebselements erfolgt (z.B. Anpassung Drehzahl, Drehmoment, Leistung).

Die Erfindung wird anhand der nachfolgenden Figuren näher erläutert. Dabei zeigen:
- Figur 1:: ein erstes Anwendungsbeispiel des erfindungsgemäßen Verfahrens bei einer Arbeitsmaschine;
- Figur 2:: die umgekehrte Durchführung der Verfahrensschritte des ersten Anwendungsbeispiels;
- Figur 3:: eine alternative Ausführung eines Anwendungsbeispiels des erfindungsgemäßen Verfahrens bei einer Arbeitsmaschine.

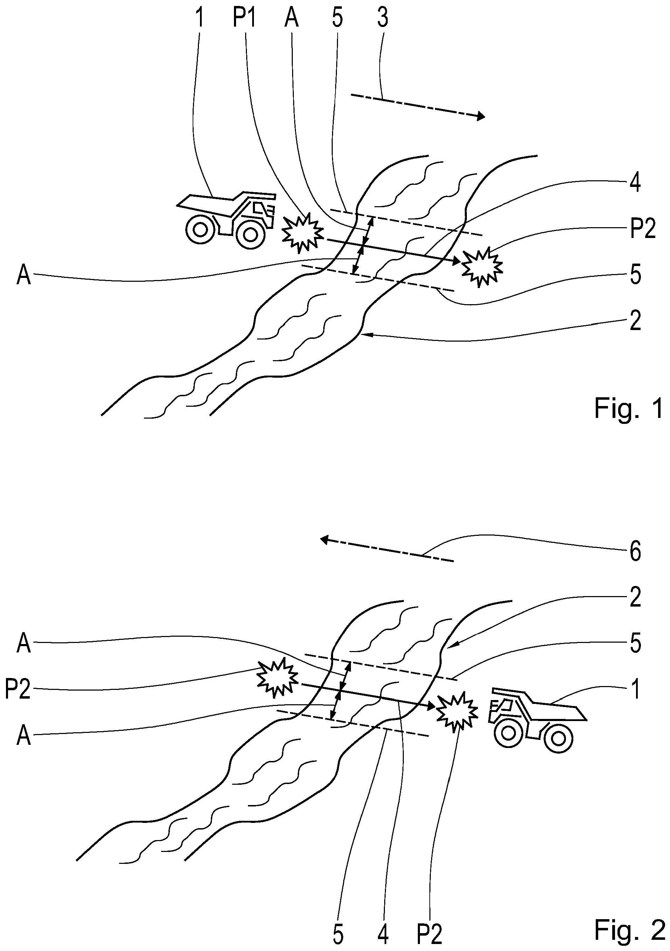

Figur 1 zeigt ein erstes Anwendungsbeispiel des erfindungsgemäßen Verfahrens. Dabei ist die Arbeitsmaschine 1 als Muldenkipper bzw. sogenannter Dumper ausgeführt. Die Abbildung zeigt ferner ein Hindernis 2 in Form eines Flusses, welcher in einer ersten Fahrtrichtung 3 durchquert werden soll. Dabei erfolgt an einer ersten Position P1 die Eingabe einer Fahrvorgabe, wobei die erste Position P1 in Bezug auf die erste Fahrtrichtung 3 vor dem Hindernis 2 liegt. Beispielsweise kann durch die Fahrvorgabe eine Aktivierung einer oder mehrerer Differenzialsperren erfolgen, da für die Flussquerung eine optimale Traktion benötigt wird und ein Festfahren unbedingt vermieden werden soll. Nachdem das Hindernis 2 überwunden wurde, erfolgt an einer zweiten Position P2 die Eingabe des Widerrufs der Fahrvorgabe. In dem zuvor beschriebenen Beispiel hätte dies das Deaktivieren der Differenzialsperren zur Folge. In gleicher Weise sind die eingangs beschriebenen Fahranforderungen auf das hier beschriebene Anwendungsbeispiel übertragbar bzw. anzuwenden.

Aus der Strecke zwischen der ersten Position P1 und der zweiten Position P2 ergibt sich ein Korridor 4 für die Aktivierung der Fahrvorgabe. Mittels Strichlinien ist in Figur 1 ferner ein Toleranzbereich 5 dargestellt. Eine obere und eine untere Grenze des Toleranzbereichs 5 weisen dabei exemplarisch einen identischen Abstand A zu dem Korridor 4 auf. Prinzipiell kann der Abstand A zwischen oberer Grenze und Korridor 4 bzw. unterer Grenze und Korridor 4 voneinander verschieden sein. Insofern die Arbeitsmaschine 1 bei einem erneuten Befahren nicht exakt den Korridor 4 befährt sich jedoch innerhalb des Toleranzbereichs 5 befindet, so kann eine automatische Wiederholung der Fahrvorgabe erfolgen.

Figur 2 zeigt schematisch das Initiieren der invertierten Fahranforderung aus Figur 1. Dabei bewegt sich die Arbeitsmaschine 1 nun in einer zweiten Fahrtrichtung 6, wobei die zweite Fahrtrichtung 6 entgegengesetzt zu der ersten Fahrtrichtung 3 ist. Mit anderen Worten befährt die Arbeitsmaschine 1 den Korridor 4 in umgekehrter Richtung im Vergleich zu der Darstellung gemäß Figur 1. Folglich werden die Schritte des Verfahrens umgekehrt. Dies bedeutet, dass nun an der zweiten Position P2 anstatt einer Deaktivierung der Differenzialsperre eine Aktivierung und an der ersten Position P1 anstatt einer Aktivierung eine Deaktivierung der Differenzialsperre erfolgt. Die Fahrvorgabe und der Widerruf der Fahrvorgabe gemäß der ersten Fahrtrichtung 3 werden demzufolge gespiegelt. Im Ergebnis muss keine manuelle Eingabe durch den Bediener erfolgen, um die gewünschte Anpassung der fahrdynamischen Parameter vorzunehmen, obwohl die Arbeitsmaschine 1 mitunter erstmals den Korridor 4 in der zweiten Fahrtrichtung 6 befährt.

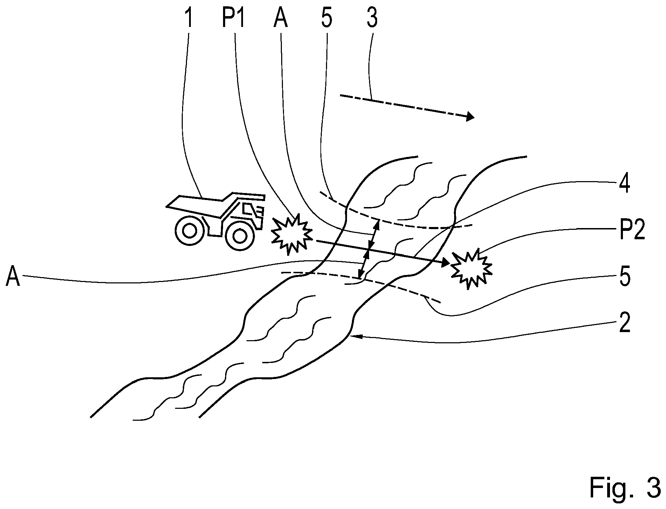

Figur 3 zeigt im Wesentlichen die Merkmale der Figur 1. Der Unterschied besteht in der alternativen Ausgestaltung des Toleranzbereichs 5. Anstatt durch gerade Linien werden hier die obere und untere Grenze mittels gekrümmter Linien darstellt. Dabei verjüngt sich der Toleranzbereich 5 zur Mitte hin, während er sich in Richtung der ersten und zweiten Position P1, P2 trichterförmig aufweitet. Mitunter kann bzgl. des Toleranzbereichs 5 eine Eingabe des Bedieners erfolgen, welche Ausgestaltung des Toleranzbereichs 5 bevorzugt wird. Die in Figur 3 dargestellte Ausführung eignet sich insbesondere dann, wenn ein abweichender Anfahrwinkel der Arbeitsmaschine 1 an die erste und/oder zweite Position P1, P2 häufiger zu erwarten ist.

### Bezugszeichen

- 1: Arbeitsmaschine
- 2: Hindernis
- 3: erste Fahrtrichtung
- 4: Korridor
- 5: Toleranzbereich
- 6: zweite Fahrtrichtung

- A: Abstand
- P1: erste Position
- P2: zweite Position

## Patentansprüche

1. Verfahren zum Invertieren von Fahrvorgaben einer Arbeitsmaschine (1), wobei in einem ersten Schritt eine Fahrvorgabe eingegeben und die Fahrvorgabe initiiert wird, in einem zweiten Schritt Positionsdaten der Arbeitsmaschine (1) der Fahrvorgabe zugeordnet werden, in einem dritten Schritt ein Widerruf der Fahrvorgabe eingegeben und die Fahrvorgabe beendet wird, in einem vierten Schritt Positionsdaten der Arbeitsmaschine (1) dem Widerruf der Fahrvorgabe zugeordnet werden, wobei anhand der zugeordneten Positionsdaten ein Korridor (4) der Fahrvorgabe definiert wird, wobei die Fahrvorgabe in einem fünften Schritt dahingehend invertiert wird, dass die Fahrvorgabe in umgekehrter Reihenfolge initiiert und widerrufen wird, wenn die Arbeitsmaschine (1) den Korridor (4) in umgekehrter Richtung befährt.

2. Verfahren nach Anspruch 1, **dadurch gekennzeichnet, dass** bei einem erneuten Befahren des Korridors (4) je nach Richtung die Fahrvorgaben in originärer oder umgekehrter Reihenfolge ausgeführt werden.

3. Verfahren nach einem der vorherigen Ansprüche, **dadurch gekennzeichnet, dass** der Korridor (4) der Fahrvorgabe einen Toleranzbereich (5) aufweist, wobei der Toleranzbereich (5) neben einen abweichenden Anfahrwinkel der Arbeitsmaschine (1) in Bezug auf den Korridor (4) eine partielle Abweichung und/oder eine vollumfängliche Abweichung einer Trajektorie berücksichtigt.

4. Verfahren nach einem der vorherigen Ansprüche, **dadurch gekennzeichnet, dass** eine aktuelle und/oder geplante Trajektorie in Bezug auf das Befahren des Korridors (4) überprüft und die Fahrvorgabe prädiktiv initiiert wird.

5. Verfahren nach einem der vorherigen Ansprüche, **dadurch gekennzeichnet, dass** das Invertieren der Fahrvorgabe durch eine Eingabe eines Bedieners erfolgt.

6. Verfahren nach einem der vorherigen Ansprüche, **dadurch gekennzeichnet, dass** mit Eingabe und/oder Widerruf der Fahrvorgabe eine Abfrage erfolgt, ob ein Invertieren der Fahrvorgabe erfolgen soll.

7. Verfahren nach einem der vorherigen Ansprüche, **dadurch gekennzeichnet, dass** die Fahrvorgabe eine Anpassung von fahrdynamischen Parametern der Arbeitsmaschine (1) bewirkt.

8. Computerprogrammprodukt, umfassend Befehle, die bei der Ausführung des Programms durch einen Computer diesen veranlassen, das Verfahren nach einen der Ansprüche 1 bis 7 auszuführen.

9. Vorrichtung zur Datenverarbeitung, umfassend Mittel zur Ausführung des Verfahrens nach einem der Ansprüche 1 bis 7.

10. Arbeitsmaschine (1) mit einem Antriebsstrang und Mitteln zur Anpassung fahrdynamischer Parameter und einer Vorrichtung nach Anspruch 9.

## Claims

1. Method for inverting driving instructions of a work machine (1), wherein in a first step a driving instruction is entered and the driving instruction is initiated, in a second step position data of the work machine (1) are assigned to the driving instruction, in a third step a cancellation of the driving instruction is entered and the driving instruction is terminated, in a fourth step position data of the work machine (1) are assigned to the cancellation of the driving instruction, wherein a corridor (4) of the driving instruction is defined on the basis of the assigned position data, wherein in a fifth step the driving instruction is inverted such that the driving instruction is initiated and cancelled in reverse order when the work machine (1) travels along the corridor (4) in the opposite direction.

2. Method according to Claim 1, **characterized in that**, when the work machine travels along the corridor (4) again, the driving instructions are performed in the original or reverse order depending on the direction.

3. Method according to either of the preceding claims, **characterized in that** the corridor (4) of the driving instruction has a tolerance range (5), wherein the tolerance range (5) takes into account a partial deviation and/or a complete deviation in a trajectory, in addition to a deviating angle of approach of the work machine (1) with respect to the corridor (4).

4. Method according to any of the preceding claims, **characterized in that** a current and/or planned trajectory with respect to the travel along the corridor (4) is checked and the driving instruction is predictively initiated.

5. Method according to any of the preceding claims, **characterized in that** the driving instruction is inverted by an entry made by an operator.

6. Method according to any of the preceding claims, **characterized in that**, when the driving instruction is entered and/or cancelled, a check is made as to whether the driving instruction is to be inverted.

7. Method according to any of the preceding claims, **characterized in that** the driving instruction causes adjustment of driving dynamics parameters of the work machine (1).

8. Computer program product, comprising commands which, when the program is executed by a computer, cause the computer to carry out the method according to any of Claims 1 to 7.

9. Device for data processing, comprising means for carrying out the method according to any of Claims 1 to 7.

10. Work machine (1) comprising a drive train and means for adjusting driving dynamics parameters and a device according to Claim 9.

## Revendications

1. Procédé d'inversion d'instructions de conduite d'un engin de chantier (1), dans lequel, lors d'une première étape, une instruction de conduite est saisie et l'instruction de conduite est déclenchée, lors d'une deuxième étape, des données de position de l'engin de chantier (1) sont affectées à l'instruction de conduite, lors d'une troisième étape, une annulation de l'instruction de conduite est saisie et l'instruction de conduite est interrompue, lors d'une quatrième étape, des données de position de l'engin de chantier (1) sont affectées à l'annulation de l'instruction de conduite, un couloir (4) de l'instruction de conduite étant défini sur la base des données de position affectées, l'instruction de conduite étant inversée lors d'une cinquième étape de telle sorte que l'instruction de conduite soit déclenchée et annulée dans l'ordre inverse lorsque l'engin de chantier (1) se déplace dans le couloir (4) en marche arrière.

2. Procédé selon la revendication 1, **caractérisé en ce que**, lors d'un nouveau déplacement dans le couloir (4), les instructions de conduite sont exécutées dans l'ordre initial ou inverse en fonction de la direction.

3. Procédé selon l'une quelconque des revendications précédentes, **caractérisé en ce que** le couloir (4) de l'instruction de conduite présente une plage de tolérance (5), la plage de tolérance (5) tenant compte, en plus d'un angle d'approche divergent de l'engin de chantier (1) par rapport au couloir (4), d'un écart partiel et/ou d'un écart complet d'une trajectoire.

4. Procédé selon l'une quelconque des revendications précédentes, **caractérisé en ce qu'**une trajectoire actuelle et/ou planifiée par rapport au déplacement dans le couloir (4) est vérifiée et l'instruction de conduite est déclenchée de manière prédictive.

5. Procédé selon l'une quelconque des revendications précédentes, **caractérisé en ce que** l'inversion de l'instruction de conduite s'effectue par une saisie d'un opérateur.

6. Procédé selon l'une quelconque des revendications précédentes, **caractérisé en ce qu'**avec la saisie et/ou l'annulation de l'instruction de conduite, une interrogation est effectuée pour savoir si une inversion de l'instruction de conduite doit avoir lieu.

7. Procédé selon l'une quelconque des revendications précédentes, **caractérisé en ce que** l'instruction de conduite provoque un ajustement de paramètres de dynamique de conduite de l'engin de chantier (1).

8. Produit de programme informatique comprenant des instructions qui, lors de l'exécution du programme par un ordinateur, amènent celui-ci à mettre en œuvre le procédé selon l'une quelconque des revendications 1 à 7.

9. Dispositif de traitement de données, comprenant des moyens pour mettre en œuvre le procédé selon l'une quelconque des revendications 1 à 7.

10. Engin de chantier (1) comprenant une chaîne cinématique et des moyens pour l'ajustement de paramètres de dynamique de conduite et un dispositif selon la revendication 9.
